# EUROPÄISCHE PATENTSCHRIFT

(11) **EP 1 442 226 B1**
(45) Veröffentlichungstag und Bekanntmachung des Hinweises auf die Patenterteilung: **02.05.2007**
(21) Anmeldenummer: 02782916.7
(22) Anmeldetag: 16.10.2002
(51) Int. Cl.: F16B 2/24, F16B 5/06

(54) **BEFESTIGUNGSKLAMMER ZUR VERBINDUNG VON PLATTEN MIT UNTERSCHIEDLICHEM AUSDEHNUNGSVERHALTEN**
FIXING CLAMP FOR CONNECTING SHEETS WITH DIFFERENT EXPANSION PROPERTIES
PINCE DE FIXATION POUR RELIER DES PLAQUES AYANT DES COMPORTEMENTS DE DILATATION DIFFERENTS

(30) Priorität: 30.10.2001 DE 10153569
(43) Veröffentlichungstag der Anmeldung: 04.08.2004
(73) Patentinhaber: A. RAYMOND ET CIE, 38000 Grenoble (FR)
(72) Erfinder: BOVILLE, Daniel, F-75020 Paris (FR)
(74) Vertreter: Rüttgers, Joachim
(86) Internationale Anmeldenummer: PCT/EP2002/011539
(87) Internationale Veröffentlichungsnummer: WO 2003/038289

(56) Entgegenhaltungen:
- EP-A- 0 628 733
- EP-A- 0 669 470
- EP-A- 0 799 758
- CH-A- 610 386
- DE-A- 19 633 203
- GB-A- 2 160 579
- US-A- 4 669 808

## Beschreibung

Die Erfindung bezieht sich auf eine Befestigungsklammer zur Verbindung von Platten mit unterschiedlichem Ausdehnungsverhalten sowie auf eine Anordnung einer Befestigungsklammer in einer Trägerplatte zur Verbindung von Platten mit unterschiedlichem Ausdehnungsverhalten, wobei in der Trägerplatte zur verschieblichen Aufnahme der Befestigungsklammer parallel zum Plattenrand eine rechteckige Öffnung ausgespart ist.

Derartige Befestigungsklammern werden beispielsweise in der Kraftfahrzeugindustrie verwendet zur Verbindung eines Kotflügels aus Kunststoff auf einem metallischen Trägerblech. Da der Ausdehnungskoeffizient des Kunststoffflügels größer ist als der des Metallträgers, kann das Befestigungselernent sich bei Temperaturschwankungen der relativen Lageveränderung zwischen Kotflügel und Trägerblech durch die querverschiebliche Einbettung im Langloch anpassen

Aus EP 0 799 758 B1 ist eine derartige Befestigungsklammer aus Kunststoff bekannt, bei welcher eine die Befestigungsöffnung abdeckende Basisplatte mit einem in die Befestigungsöffnung einlagerbaren Gleitstück verbunden ist, welches in der Öffnung querverschieblich geführt und durch elastische Federelemente in einer Gleichgewichtslage gehalten wird. Die Führung erfolgt durch an den Längsseiten im Abstand der Dicke der Kotflügelplatte angeformten Schenkel, welche den Rand des Langloches hintergreifen. Um das Gleitstück in die Öffnung einsetzen zu können, ist an einer Längsseite nur ein Schenkel angeformt, welcher in eine entsprechend große Aussparung im Öffnungsrand einführbar ist. Zur Einlagerung des Gleitstücks muß dieser Schenkel zunächst in die Aussparung eingeführt und dann in die Befestigungsposition seitlich verschoben werden. Die mit einem Durchgangsloch versehene Befestigungklammer wird sodann durch die an den Querrändem der rechteckigen Öffnung sich abstützenden elastischen Federelemente in dieser Befestigungsposition gehalten.

Diese Befestigungsklammer hat sich offenbar in der Praxis nicht bewährt. Der Grund mag darin liegen, daß der Einführschenkel des Gleitstücks sich je nach Temperatur bedingter Ausgleichsbewegung in die Aussparung am Rand der rechteckigen Öffnung verschieben und das Gleitstück dann aus der Öffnung herausspringen kann. Auch können die an den Seitenkanten angeformten elastischen Federelemente mit der Zeit ihre Elastizität einbüßen, so daß die Klammer bei der Vormontage nicht mehr automatisch in der vorgesehenen Befestigungsposition gehalten und die weitere Herstellung der Verbindung daher erschwert wird.

Aufgabe der Erfindung ist daher, eine Befestigungsklammer zur Verbindung von Platten mit unterschiedlichem Ausdehnungsverhalten und eine zugehörige Anordnung einer Befestigungsklammer in einer Trägerplatte zur Verbindung von Platten mit unterschiedlichem Ausdehnungsverhalten so zu gestalten, daß sich diese leicht in die Befestigungsöffnung einsetzen läßt und dann bei jeder seitlichen Verschiebung sicher gehalten wird.

Zur Lösung dieser Aufgabe wird eine Befestigungsklammer mit den im Patentanspruch 1 sowie eine Anordnung mit den in dem Patentanspruch 3 angegebenen Merkmalen vorgeschlagen.

Hierdurch läßt sich die Klammer mit einfachen Mitteln aus einer Blechplatine formen und gleichzeitig mit einer Gewindehülse versehen, wodurch auch der beim Stand der Technik erforderliche Einsatz einer besonderen Mutter entfällt.

Die Einlagerung der Befestigungsklammer in der rechteckigen Öffnung bereitet keine Probleme. Die Klammer wird zu diesem Zweck mit dem vorderen Schenkel voraus soweit in die Öffnung eingeführt, so dass der hochstehende Schenkel hinter den Öffnungsrand tritt und die Gewindehülse am gegenüberliegenden Öffnungsrand vorbeigeht. Sodann wird die Klammer hochgedrückt, bis der hintere Schenkel vor dem Plattenrand liegt. Nun wird die Klammer soweit vorgeschoben, bis die vorher niedergedrückten Federschenkel mit ihrem Ende am hinteren Öffnungsrad hochfedem und so die Befestigungsklammer in der eingebauten Lage sichern.

Für die querverschiebliche Ausbildung der Klammer ist es dabei zweckmäßig, wenn die hochgebogenen Federstege an ihren Enden in entgegengesetzter Richtung abgewinkelt sind.

In der Anordnung gemäß Patentanspruch 3 ist die Befestigungsklammer und die rechteckige Öffnung in der Trägerplatte in bestimmten Dimensionen zueinander zu halten, so dass eine sichere Montage und Klemmung der Befestigungsklammer in der Trägerplatte gewährleistet ist.

Da die hinteren Klemmschenkel zur Basisplatte soviel Abstand haben, daß sich diese leicht über den Plattenrand aufdrücken lassen, ist es nach einem weiteren Merkmal der Erfindung vorteilhaft, wenn zwischen der Gewindehülse und dem hinteren Klemmschenkel ein weiterer Federschenkel nach den Merkmalen des Patentanspruchs 2 ausgeformt und mit einer etwa halbkugelförmigen Kalotte ausgeprägt ist. Dieser Kalotte kann im Plattenrand der Trägerplatte eine entsprechende Vertiefung zugeordnet sein, in welche die Kalotte in der vorbestimmten Montageposition der Befestigungsklammer dann einrasten kann.

In der Zeichnung ist ein bevorzugtes Ausführungsbeispiel der erfindungsgemäßen Befestigungsklammer dargestellt, welche nachfolgend näher beschrieben wird. Es zeigt
- Fig. 1: Die Befestigungsklammer in einer Seitenansicht,
- Fig. 2: Die gleiche Klammer in einer Draufsicht,
- Fig. 3: Eine Trägerplatte mit rechteckiger Öffnung in perspektivischer Darstellung von unten gesehen,
- Fig. 4: Eine in der Öffnung der Trägerplatte eingesetzte Befestigungsklammer in perspektivischer Draufsicht,
- Fig. 5: der Einbau der Klammer in die rechteckige Öffnung der im Schnitt dargestellten Trägerplatte und
- Fig. 6: Die gleiche Trägerplatte mit eingebauter Befestigungsklammer und zum Verbinden an die Klammer angelegter zweiter Platte.

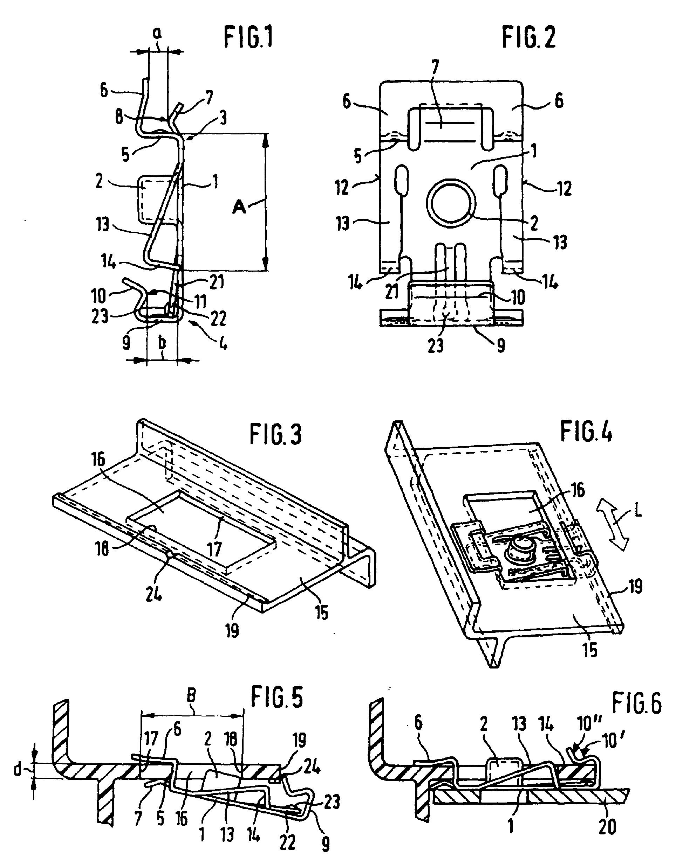

Die in den Figuren dargestellte Befestigungsklammer dient zur Verbindung von Platten mit unterschiedlichem Ausdehungsverhalten unter Verwendung einer Schraube. Die Klammer besteht hierbei aus einer rechteckigen Basisplatte **1** aus Federstahl mit einer im Zentrum angeordneten Gewindehülse **2** zum Eindrehen der Schraube. An der in **Fig.1** oben dargestellten vorderen Querkante **3** der Basisplatte **1** sind zwei Querstege **5** in die gleiche Richtung wie die Gewindehülse **2** hochgebogen und dann zwei Klemmschenkel **6** von der Hülse **2** weg parallel zur Basisplatte **1** weggebogen, während zwischen den beiden Klemmschenkeln **6** ein Gegenschenkel **7** an der Querkante **3** angeformt ist. Dieser Gegenschenkel **7** ist zunächst über eine kurze Länge leicht auf die Klemmschenkel **6** zu gebogen und dann wieder leicht zurückgebogen, wobei der Abstand **"a"** zwischen der Knickkante **8** und den gegenüberliegenden Klemmschenkeln **6** etwa gleich der Dicke **"d"** der Trägerplatte **15** ist (vgl. **Figur 5).**

An der hinteren Querkante **4** der Basisplatte **1** ist über eine abgewinkelte Querwand **9** ein weiterer Klemmschenkel **10** hochgebogen, welcher in die gleiche Richtung weist wie die vorderen Klemmschenkel **6.** Dieser Klemmschenkel **10** ist zunächst über einen kurzen Abschnitt leicht auf die Basisplatte **1** zu und dann von dieser über einen zweiten Abschnitt steil weggebogen. Der Abstand **"b"** zwischen der Knickkante **11** und der Basisplatte **1** ist hierbei geringfügig größer als der Abstand "a" an den vorderen Klemmschenkeln **6.**

Beiderseits der Gewindehülse **2** sind aus der Basisplatte **1** entlang der Längskanten 12 Federstege **13** eingeschnitten und zu dem hinteren Klemmschenkel **10** schräg hochgebogen, wobei der Endbereich **14** bis auf die Höhe der Basisplatte **1** etwa senkrecht heruntergebogen ist. Hierbei ist darauf zu achten, daß der Abstand **"A"** zwischen den Endbereichen **14** und den Querstegen **5** der vorderen Klemmschenkel **6** gleich oder geringfügig kleiner ist als der lichte Abstand **"B"** zwischen den beiden Längsrändern **17** und **18** der rechteckigen Öffnung **16** (vgl. Figur 5).

Zum Einbau der Befestigungsklammer in die rechteckige Öffnung 16 wird die Klammer, wie aus **Figur 5** ersichtlich, zunächst mit den vorderen Klemmschenkel **6** voraus schräg von unten in die Öffnung **16** so eingeführt, daß die Klemmschenkel **6** über den Längsrand **17** der Öffnung **16** und der Gegenschenkel **7** unter den Längsrand **17** gerichtet sind. Dann wird die Klammer soweit in die Öffnung **16** eingeführt, bis die Gewindehülse **2** am hinteren Längsrand **18** der Öffnung **16** vorbeigeht und der hintere Klemmschenkel **10** sich noch vor dem äußeren Plattenrand **19** befindet. Sodann wird die Klammer gegen die Kraft der Federstege **13** hinten hochgedrückt, bis der hintere Klemmschenkel **10** sich über den Plattenrand **19** verschieben läßt. Sobald der vordere Quersteg **5** am Längsrand **17** und die hintere Querwand **9** am Plattenrand **19** anliegen, schnellen die niedergedrückten Federstege **13** in ihre Ausgangslage zurück und legen sich mit den abgewinkelten Endbereichen **14** am hinteren Längsrand **18** so an, daß die Klammer im Loch **16** zwischen den beiden Längsrändern **17** und **18** in Bewegungsrichtung des Doppelpfeiles **"L"** längsverschieblich geführt ist (vgl. **Figur 4**).

Um das Spiel des hinteren Plattenrandes **19** zwischen dem hinteren Klemmschenkel **10** und der Basisplatte **1** auszugleichen, ist zwischen der Gewindehülse **2** und dem hinteren Klemmschenkel **10** aus der Mitte der Basisplatte **1** heraus ein weiterer Federsteg **21** ausgestanzt und in die gleiche Richtung wie der hintere Klemmschenkel **10** leicht hochgebogen. An seinem freien, auffederbaren Ende **22** ist eine etwa halbkugelförmige Kalotte **23** in Richtung auf den Klemmschenkel **10** eingedrückt. Durch diesen Federsteg **21** wird die Klammer im Bereich des hinteren Klemmschenkel **10** auf dem Plattenrand **19** spielfrei gehalten.

Vorzugsweise befindet sich im Plattenrand **19 ,** wie aus **Figur 3** ersichtlich, in der vorbestimmten Montagelage der Klammer eine entsprechende Vertiefung **24,** in welche die Kalotte **23** federnd einrasten kann, so daß die Klammer in dieser Lage formschlüssig gehalten wird. Bei Auftreten von Ausdehnungskräften kann die Kalotte 23 jedoch aus der Vertiefung 24 herausspringen und die Befestigungsklammer in Pfeilrichtung "L" ausweichen.

### Bezugszeichenliste

- 1: Basisplatte
- 2: Gewindehülse
- 3: Vordere Querkante
- 4: Hintere Querkante
- 5: Querstege
- 6: Klemmschenkel
- 7: Gegenschenkel
- 8: Knickkante
- 9: Querwand
- 10: Klemmschenkel
- 11: Knickkante
- 12: Längskanten
- 13: Federstege
- 14: Endbereich
- 15: Trägerplatte
- 16: Rechteckige Öffnung
- 17: Längsrand
- 18: Längsrand
- 19: Plattenrand
- 20: Gegenplatte
- 21: Federsteg
- 22: Auffederbares Ende
- 23: Kalotte
- 24: Vertiefung im Plattenrand

## Patentansprüche

1. Befestigungsklammer zur Verbindung von Platten mit unterschiedlichem Ausdehnungsverhalten, wobei die Befestigungsklammer aus einer rechteckigen Basisplatte (1) aus Federblech besteht mit einer im Zentrum angeordneten Gewindehülse (2), und wobei an beiden Querkanten (3, 4) senkrecht zur Basisplatte (1) in die gleiche Richtung weisende Querstege (5) ausgebildet sind, die parallel zur Basisplatte (1) in die gleiche Richtung weisende Klemmschenkel (6, 10) aufweisen, wobei zum Erreichen der Klemmwirkung die Querkante (3), an der der von der Basisplatte (1) wegweisende Klemmschenkel (6) angeordnet ist, das heißt an der vorderen Querkante (3), einen Gegenschenkel (7) aufweist, von denen die Klemmschenkel (6) an der vorderen Querkante (3) in eine Öffnung (16) einer Trägerplatte (15) einführbar und auf deren Rückseite festklemmbar sind, und die Klemmschenkel (10) an der gegenüberliegenden, hinteren Querkante (4) gleichzeitig von außen auf dem R and (19) der Trägerplatte (15) festklemmbar sind, und wobei ferner beiderseits der Gewindehülse (2) in der Basisplatte (1) eingeschnittene Federstege (13) in die gleiche Richtung wie die Querstege (5) schräg hochgebogen und in den Endbereichen (14) bis auf die Höhe der Basisplatte (1) etwa senkrecht heruntergebogen sind.

2. Befestigungsklammer nach Anspruch 1, **dadurch gekennzeichnet, dass** zwischen der Gewindehülse (2) und dem hinteren Klemmschenkel (10) aus der Mitte der Basisplatte (1) ein weiterer Federschenkel (21) ausgestanzt und in die gleiche Richtung wie der hintere Klemmschenkel (10) hochgebogen ist und an seinem freien, auffederbaren Ende (22) eine etwa halbkugelförmige Kalotte (23) in Richtung auf den Klemmschenkel (10) ausgeprägt ist.

3. Anordnung einer Befestigungsklammer nach Anspruch 1 oder Anspruch 2 in einer Trägerplatte zur Verbindung von Platten mit unterschiedlichem Ausdehnungsverhalten, wobei in der Trägerplatte (15) zur verschieblichen Aufnahme der Befestigungsklammer parallel zum Plattenrand (19) eine rechteckige Öffnung (16) ausgespart ist, **dadurch gekennzeichnet, dass** der Abstand "A" zwischen den Endbereichen (14) und den Querstegen (5) der vorderen Klemmschenkel (6) gleich oder geringfügig kleiner ist als der lichte Abstand "B" zwischen den beiden Längsrändern (17) und (18) der rechteckigen Öffnung (16).

## Claims

1. Fixing clamp for connecting sheets having different expansion behaviour, the fixing clamp consisting of a rectangular baseplate (1) which is made of spring plate and has a threaded bush (2) arranged in the centre, and transverse webs (5) which point in the same direction and have clamping limbs (6, 10) pointing in the same direction and parallel to the baseplate (1) being formed on both transverse edges, (3,4), perpendicularly to the baseplate (1), the transverse edge (3) on which the clamping limb (6) pointing away from the baseplate (1) is arranged, i.e. on the front transverse edge (3), having an opposite limb (7), of which the clamping limbs (6) on the front transverse edge (3) can be introduced into an opening (16) of a support plate (15) and can be clamped on the back thereof, and the clamping limbs (10) on the opposite, rear transverse edge (4) simultaneously being capable of being clamped from the outside on the edge (19) of the support plate (15), and furthermore spring webs (13) cut into the baseplate (1) on both sides of the threaded bush (2) being bent upwards obliquely in the same direction as the transverse webs (5) and being bent approximately perpendicularly downwards in the end regions (14) to the height of the baseplate (1).

2. Fixing clamp according to Claim 1, **characterized in that** a further spring limb (21) is punched out of the middle of the baseplate (1) between the threaded bush (2) and the rear clamping limb (10) and is bent upwards in the same direction as the rear clamping limb (10), and, at its free, springy end (22), an approximately hemispherical cap (23) is stamped out in the direction of the clamping limb (10).

3. Arrangement of a fixing clamp according to Claim 1 or Claim 2 in a support plate for connecting sheets having different expansion behaviour, a rectangular opening (6) being cut out in the support plate (15) for displaceably holding the fixing clamp parallel to the sheet edge (19), **characterized in that** the distance "A" between the end regions (14) and the transverse webs (5) of the front clamping limbs (6) is equal to or slightly less than the internal distance "B" between the two longitudinal edges (17) and (18) of the rectangular opening (16).

## Revendications

1. Agrafe de fixation destinée à l'assemblage de plaques présentant respectivement des coefficients de dilatation différents, l'agrafe de fixation se composant en l'occurrence d'une plaque de base de forme rectangulaire (1) en tôle d'acier à ressort, comportant une douille filetée (2) dans sa portion centrale, des barrettes entretoises transversales (5) étant en l'occurrence réalisées au niveau des deux arêtes transversales (3, 4), perpendiculairement à la plaque de base (1) et orientées dans la même direction, qui comportent des pattes de blocage (6, 10) disposées parallèlement à la plaque de base (1) et orientées dans la même direction, l'arête transversale (3), au niveau de laquelle la patte de blocage (6) allant en s'écartant de la plaque de base (1) est disposée, c'est-à-dire au niveau de l'arête antérieure transversale (3), comportant en l'occurrence, pour obtenir l'effet de blocage recherché, une patte antagoniste (7), pattes dont la patte de blocage (6) au niveau de l'arête transversale antérieure (3) est destinée à être introduite dans une ouverture (16) ménagée dans une plaque faisant office de support (15) et à être bloquée en position sur la face arrière, et les pattes de blocage (10) prévues au niveau de l'arête transversale postérieure (4) diamétralement opposée sont destinées à être simultanément bloquées en position, depuis l'extérieur, sur le bord (19) de la plaque formant support (15), et en outre des barrettes élastiques (13) réalisées par découpage dans la plaque de base (1) de part et d'autre de la douille filetée (2) étant en l'occurrence repliées suivant une disposition oblique dans la même direction que les barrettes entretoises transversales (5) et au niveau de leurs portions d'extrémité (14) repliées vers le bas suivant une orientation sensiblement verticale jusqu'à la hauteur de la plaque de base (1).

2. Agrafe de fixation selon la revendication 1, **caractérisée en ce qu'**entre la douille filetée (2) et la patte de blocage arrière (10) une autre barrette élastique (21) est réalisée par découpage à la presse dans la portion centrale de la plaque de base (1) et est repliée vers le haut dans la même direction que celle de la patte de blocage arrière (10) et **en ce qu'**une empreinte ayant sensiblement la forme d'une calotte hémisphérique, orientée vers la patte de blocage (10), est réalisée dans son extrémité libre capable de céder par déformation élastique (22).

3. Agencement d'une agrafe de fixation selon la revendication 1 ou la revendication 2, dans une plaque faisant office de support, pour l'assemblage de plaques présentant respectivement des coefficients de dilatation différents, une ouverture de forme rectangulaire (16) étant en l'occurrence ménagée dans la plaque formant support (15), parallèlement au bord (19) de la plaque, pour l'introduction de l'agrafe de fixation avec une possibilité de déplacement, **caractérisé en ce que** l'intervalle d'écartement "A" entre les portions d'extrémité (14) et les barrettes entretoises transversales (5) des pattes de blocage antérieures (6) est de même dimension ou très légèrement plus petit que au gabarit de passage "B" existant entre les deux bords longitudinaux (17) et (18) de l'ouverture rectangulaire (16).
